# EUROPÄISCHE PATENTSCHRIFT

(11) **EP 0 551 567 B1**
(45) Veröffentlichungstag und Bekanntmachung des Hinweises auf die Patenterteilung: **14.06.1995**
(21) Anmeldenummer: 92115481.1
(22) Anmeldetag: 10.09.1992
(51) Int. Cl.: F16F 15/12

(54) **Drehzahladaptiver Drehschwingungsdämpfer**
Rotational-speed-dependent torsional vibration damper
Amortisseur de vibrations en torsion qui s'adapte à la vitesse de rotation

(30) Priorität: 17.01.1992 DE 4201049
(43) Veröffentlichungstag der Anmeldung: 21.07.1993
(73) Patentinhaber: Firma Carl Freudenberg, 69469 Weinheim (DE)
(72) Erfinder: Ochs, Winfried, W-6146 Alsbach-Hähnlein (DE); Röhrig, Bernhard, W-6148 Heppenheim (DE)

(56) Entgegenhaltungen:
- EP-A- 0 218 774
- EP-A- 0 250 913
- EP-A- 0 291 942
- DE-A- 2 336 121
- DE-A- 3 340 258
- DE-A- 3 535 286
- DE-A- 3 633 414
- DE-C- 3 826 088
- GB-A- 2 180 034

## Beschreibung

Die Erfindung betrifft einen drehzahladaptiven Drehschwingungsdämpfer, bei dem ein Naben- und ein Schwungring einander radial umschließen und parallel zueinander durch gleichmäßig in Umfangsrichtung verteilte, säulenförmig ausgebildetete, erste und zweite Federelemente aus Gummi zumindest temporär verbunden sind, wobei die zweiten Federelemente durch die sich bei Einleitung hoher Drehzahlen ergebenden Fliehkräfte in radialer Richtung dehnbar und in ergänzenden Eingriff mit dem Schwungring bringbar sind.

Ein solcher Drehschwingungsdämpfer ist aus der DE-OS 36 33 414 bekannt. Bei nicht drehendem Schwingungsdämpfer weisen die zweiten Federelemente, die durch die ersten Federelemente vorgespannt sind, außenseitig einen Abstand von der Innenseite des Schwungringes auf. Sie legen sich bei einer gewünschten Drehzahl fliehkraftbedingt an die Innenseite des Schwungringes an, was eine Parallelschaltung ihrer Federwirkung zu der Federwirkung des ersten Federelementes bewirkt. Dabei ist allerdings zu beachten, daß bei auftretenden Drehschwingungen, wenn das zweite Federelement an die Innenseite des Schwungringes angelegt ist, eine Relativbewegung zwischen dem zweiten Federelement, in das ein Zusatzteil eingebettet ist, und der Innenseite des Schwungringes nicht vermieden werden kann.

Die reibende Berührung zwischen der Außenseite der zweiten Federelemente und der Innenseite des Schwungringes ist zwar auf eine kurze Zeitdauer begrenzt, führt aber dennoch zu Verschleiß in diesem Bereich. Durch die Ausgestaltung der Kontaktflächen des Außenumfanges des zweiten Federelementes und der Innenseite des Schwungringes ist eine Einstellung des Steifigkeitsanstieges bei gegenseitiger Berührung der beiden Teile nicht möglich.

Der Erfindung liegt die Aufgabe zugrunde, einen drehzahladaptiven Drehschwingungsdämpfer der eingangs genannten Art zu zeigen, bei dem Verschleiß gegenüber dem vorbekannten Drehschwingungsdämpfer weiter reduziert ist und der durch eine gezielte Einstellung des Steifigkeitsanstieges während der bestimmungsgemäßen Verwendung bessere Gebrauchseigenschaften bei einer verlängerten Gebrauchsdauer aufweist.

Diese Aufgabe wird erfindungsgemäß mit den kennzeichnenden Merkmale von Anspruch 1 gelöst. Auf vorteilhafte Ausgestaltungen nehmen die Unteransprüche Bezug.

Bei dem erfindungsgemäßen Drehschwingungsdämpfer ist es vorgesehen, daß die zweiten Federelemente in Umfangsrichtung betrachtet durch eine in Richtung des Schwungringes vorspringende Anschlagfläche begrenzt sind, die in eine kongruent geformte Mulde eines dritten Federelementes aus Gummi eingreift, daß die dritten Federelemente an dem Schwungring festgelegt sind und daß die Anschlagfläche und die Mulde in nicht drehendem Zustand des Drehschwingungsdämpfers einen radialen Abstand voneinander haben. Gemäß einer vorteilhaften Ausgestaltung kann die Ansclagfläche im wesentlichen V-förmig ausgebildet sein. Eine derartige Ausgestaltung bedingt während der bestimmungsgemäßen Verwendung des Drehschwingungsdämpfers bei Berührungen des zweiten und des dritten Federelementes eine weitgehend formschlüssige Verbindung und verhindert dadurch reibende und damit verschleißfördernde Relativbewegungen der Anschlagflächen zueinander. Eine Berührung der zweiten Federelemente mit dem in radialer Richtung nach außen angrenzenden Schwungring erfolgt bei dem erfindungsgemäßen Drehschwingungsdämpfer nicht, sondern eine Anschlagberührung ergibt sich bedarfsweise lediglich im Bereich der zweiten und dritten Federelemente, die beide aus einem gummielastischem Werkstoff bestehen. Durch die erfindungsgemäße Ausgestaltung der Kontaktflächen des zweiten Federelementes und des dritten Federelementes und eine gezielte Werkstoffauswahl ist eine Einstellung des Steifigkeitsanstieges bei Berührung der beiden Federelemente miteinander möglich. In Abhängigkeit von den jeweiligen Gegebenheiten des Anwendungsfalles ist ein unterschiedlich harter Anschlag einstellbar. Die drei Federelemente können auf unterschiedliche Weise zwischen dem Naben- und dem Schwungring angeordnet und beispielsweise ineinander übergehend ausgebildet sein. Sind zumindest zwei der drei Federelemente einstückig ineinander übergehend ausgebildet ist die Herstellung des erfindungsgemäßen Drehschwingungsdämpfers wesentlich vereinfacht, was in wirtschaftlicher Hinsicht von hervorzuhebender Bedeutung ist.

Zur Funktion des Drehschwingungsdämpfers ist folgendes auszuführen:
Die zweiten und die dritten Federelemente weisen zumindest während der Anlaufphase zumindest teilweise einen gegenseitigen radialen Abstand zueinander auf, der mit steigender Drehzahl geringer wird. Dadurch, daß die Anschlagflächen der zweiten und dritten Federelemente einander nicht berühren, wird Verschleiß wärend dieses Betriebszustandes ausgeschlossen. Auftretende Drehschwingungen werden durch die federnde Nachgiebigkeit des ersten Federelementes, das zwischen dem Naben- und dem Schwungring angeordnet ist, und durch die Masse des Schwungringes gedämpft.

Bei steigender Drehzahl legt sich das zweite Federelement, das beispielsweise V-förmig oder sinuskurvenähnlich ausgebildet sein, fliehkraftbedingt außenseitig und unverrückbar an die Oberfläche der Mulde des dritten Federelementes an. Die Berührung der zweiten und der dritten Federelemente bedingt eine Parallelschaltung zu den ersten Federelementen, wobei die erzielte Dämpfungswirkung von den insgesamt vorhandenen Federelastizitäten aller Federelemente und der Masse des Schwungringes abhängig ist. Der Dämpfung auftretender Drehschwingungen bei hohen Drehzahlen wird der erfindungsgemäße Drehschwingungsdämpfer während einer außenordentlich langen Gebrauchsdauer in besonders guter Weise gerecht.

In Abhängigkeit von den jeweiligen Gegebenheiten des Anwendungsfalles kann in den in Richtung des Schwungringes vorspringenden Teilbereichen der zweiten Federelemente jeweils eine Trägheitsmasse eingebettet sein, die die Abstimmung der erfindungsgemäßen Drehschwingungsdämpfer insbesondere bei Anwendungen im Bereich der KFZ-Technik vereinfacht. Bei gleicher äußerer Gestalt kann der Drehschwingungsdämpfer zur Dämpfung unterschiedlicher Frequenzbereiche zur Anwendung gelangen.

Gemäß einer vorteilhaften Ausgestaltung ist es vorgesehen, daß die zweiten Federelemente in den sich mit den dritten Federelementen deckenden Umfangssektoren durch einen Ringspalt von dem Nabenring getrennt und durch außerhalb der Umfangssektoren angeordnete Halteflächen mit dem Nabenring verbunden sind. Zugspannungen innerhalb der zweiten Federelemente können während der bestimmungsgemäßen Verwendung des Drehschwingungsdämpfers bei hohen Drehzahlen weitgehend vermieden werden, wodurch die Gebrauchsdauer weiter erhöht werden kann.

Sowohl der Radialabstand zwischen den in Richtung des Schwungringes vorspringenden Erhebungen der zweiten Federelemente und der muldenförmigen Vertiefungen der dritten Federelemente als auch die Größe des Radialspaltes zwischen dem Nabenring und dem zweiten Federelement und die Größe der Trägheitsmasse, die bedarfsweise in das zweite Federelement eingebettet sein kann, ist auf den jeweiligen Anwendungsfall abzustimmen.

Besonders gute Gebrauchseigenschaften des drehzahladaptiven Drehschwingungsdämpfers haben sich ergeben, als eine im wesentlichen mittig in der Anschlagfläche errichtete, gedachte Flächennormale die Halteflächen zwischen Nabenring und zweitem Federelement im wesentlichen mittig durchschnitten hat. Sowohl die geringen mechanischen Belastungen auf die zweiten und dritten Federelemente als auch die exakte räumliche Zuordnung der in Eingriff befindlichen zweiten und dritten Federelemente im höheren Drehzahlbereich sind von hervorzuhebender Bedeutung.

Drei Beispiele drehzahladaptiver Drehschwingungsdämpfer sind in den als Anlage beigefügten Zeichnungen gezeigt und werden im folgenden weiter verdeutlicht.
Figur 1 zeigt eine schematische Darstellung des erfindungsgemäßen Drehschwingungsdämpfers, bei dem die ersten, zweiten und dritten Federelemente jeweils separat zwischen dem Naben- und dem Schwungring eingeformt sind, während in
Figur 2 die zweiten und die dritten Federelemente ineinander übergehend ausgebildet sind.
In Figur 3 ist ein Ausführungsbeispiel gezeigt, in dem das zweite Federelement nur einseitig am Nabenring festgelegt ist.

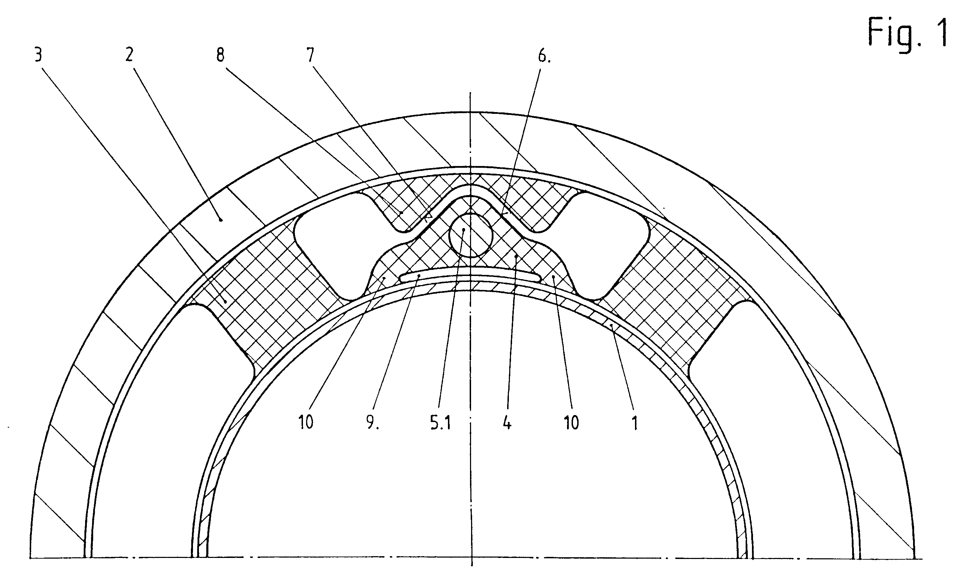

Die drezahladaptiven Drehschwingungsdämpfer gemäß der Figuren 1, 2 und 3 weisen einen Naben- 1 und einen Schwungring 2 auf, die einander radial umschließen und durch in Umfangsrichtung verteilte erste Federelemente 3 miteinander verbunden sind. Die Drehschwingungsdämpfer sind in nicht-drehendem Zustand dargestellt, so daß ein radialer Spalt zwischen dem zweiten Federelement 4 und dem dritten Federelement 8 besteht.

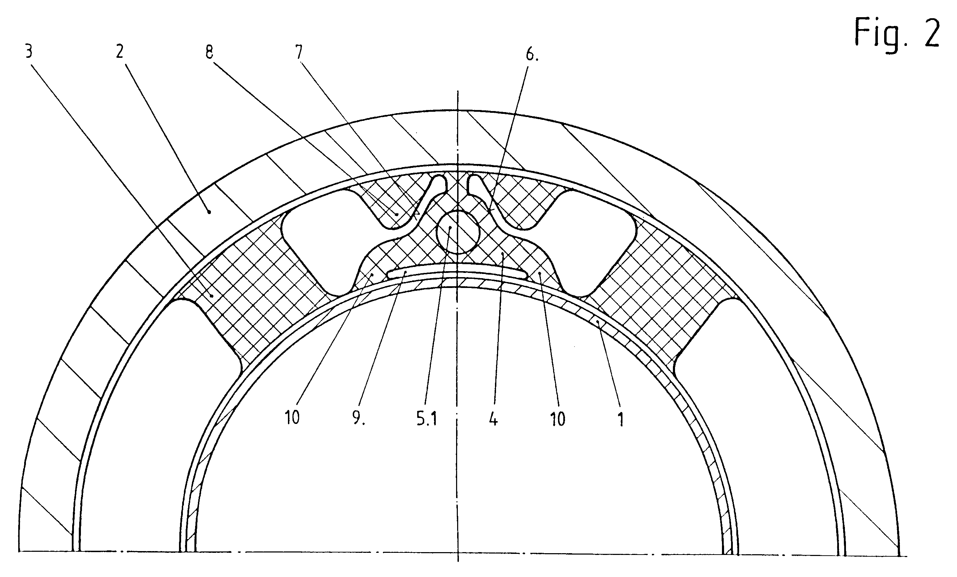

Das zweite Federelement 4 ist in den Figuren 1 und 2 in Umfangsrichtung betrachtet durch eine im wesentlichen V-förmig in Richtung des Schwungringes 2 vorspringende Anschlagfläche 6 begrenzt, die mit einer gleichartig gestalteten Mulde 7 des dritten Federelementes 8 in Eingriff bringbar ist. Das zweite Federelement 4 umschließt in den Figuren 1 und 2 ein Zusatzteil in Form einer Trägheitsmasse 5.1, die beispielsweise durch einen Metallzylinder gebildet sein kann. Bei Einleitung hoher Drehzahlen verstärkt die Trägheitsmasse 5.1 die sich ergebenden Fliehkräfte in radialer Richtung nach außen, wodurch das zweite Federelement 4 dehnbar und mit dem dritten Federelement 8 in Eingriff bringbar ist. Das dritte Federelement 8 ist unverrückbar an den Schwungring 2 angeformt.

Das zweite Federelement 4 und der Nabenring 1 begrenzen in dem von dem dritten Federelement 8 überdeckten Umfangssektor einen Ringspalt 9, wobei das zweite Federelement 4 außerhalb des Umfangssektor mit Halteflächen 10 versehen und an den Nabenring 1 angeformt ist. Der Radialspalt 9 bewirkt während der bestimmungsgemäßen Verwendung des Drehschwingungsdämpfers eine deutliche Reduzierung von Zugspannungen innerhalb des zweiten Federelementes 4 und eine einfachere Abstimmung des Drehschwingungsdämpfers auf die jeweiligen Gegebenheiten des Anwendungsfalles. Im Gegensatz zu der Ausführungsform nach Figur 1, bei der sämtliche Federelemente 3, 4, 8 separat ausgebildet und untereinander nicht in Verbindung stehen, sind die zweiten und dritten Federelemente 4, 8 aus Figur 2 ineinander übergehend ausgebildet. Die Verbindung zwischen den Federelementen ist in diesem Beispiel an der Stelle der höchsten Erhebung des sinusförmigen Profils des zweiten Federelementes 4 und im Bereich der tiefsten Absenkung der Mulde 7 des dritten Federelementes 8 vorgesehen. Andere Verbindungsstellen zwischen den Federelementen sowie eine Verbindung zwischen dem ersten und dem zweiten 4 und/oder dem ersten 3 und dem dritten Federelement 8 können ebenfalls vorgesehen sein. Die Dämpfungscharakteristik kann durch die Ausgestaltung der Federelemente sowie die zur Anwendung gelangenden Materialien und die Masse des Schwungringes 2 beeinflußt werden.

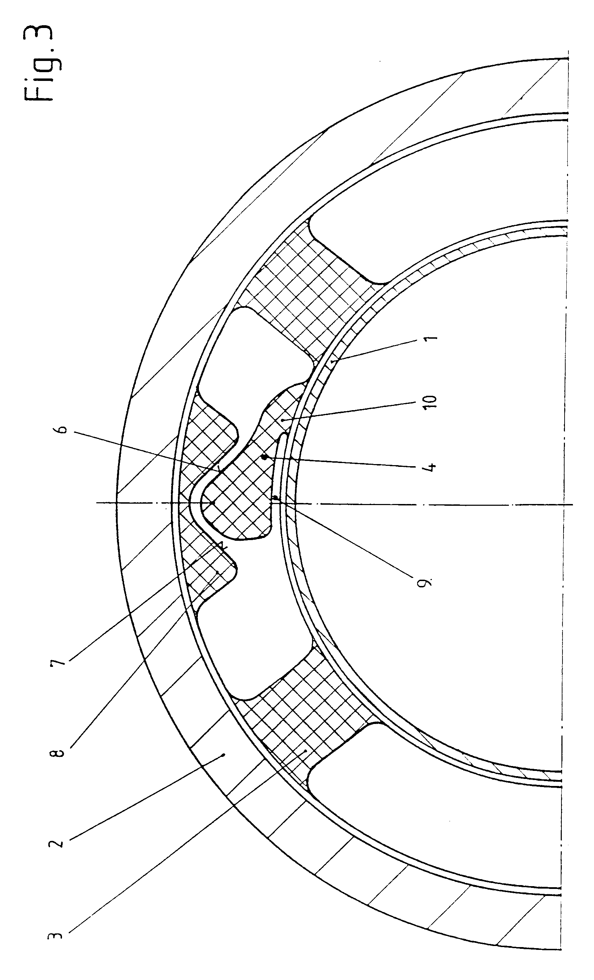

In Figur 3 ist ein weiteres Ausführungsbeispiel gezeigt, wobei das zweite Federelement 4 im Gegensatz zu den Ausführungsbeispielen gemäß der Figuren 1 und 2 nur einseitig am Nabenring 1 festgelegt ist. Der Ringspalt 9 ist in Umfangsrichtung einseitig geöffnet, wodurch sich eine ausgezeichnete Beweglichkeit des zweiten Federelementes 4 in radialer Richtung während der bestimmungsgemäßen Verwendung des Drehschwingungsdämpfers ergibt. Das krakarmförmig ausgebildete zweite Federelement 4 weist an seiner mit dem Nabenring 1 nicht verbundenen umfangsseitigen Begrenzung eine entsprechend der Mulde 7 des dritten Federelementes 8 gestaltete Form auf, die fliehkraftbedingt mit dieser in Eingriff bringbar ist. Eine Trägheitsmasse gemäß den Figuren 1 und 2 ist in diesem Falle zumeist entbehrlich, da die Trägheitsmasse des in radialer Richtung nach außen schwingfähigen zweiten Federelementes 4 entsprechend den jeweiligen Gegebenheiten des Anwendungsfalles ausgelegt werden kann.

## Patentansprüche

1. Drehzahladaptiver Drehschwingungsdämpfer, bei dem ein Naben- und ein Schwungring einander radial umschließen und parallel zueinander durch gleichmäßig in Umfangsrichtung verteilte, säulenförmig ausgebildete, erste und zweite Federelemente aus Gummi zumindest temporär verbunden sind, wobei die zweiten Federelemente durch die sich bei Einleitung hoher Drehzahlen ergebenen Fliehkräfte in radialer Richtung dehnbar und in ergänzenden Eingriff mit dem Schwungring bringbar sind, dadurch gekennzeichnet, daß die zweiten Federelemente (4), in Umfangsrichtung betrachtet, durch eine in Richtung des Schwungringes (2) vorspringende Anschlagfläche (6) begrenzt sind, die in eine kongruent geformte Mulde (7) eines dritten Federelementes (8) aus Gummi eingreift, daß die dritten Federelemente (8) an dem Schwungring (2) festgelegt sind und daß die Anschlagfläche (6) und die Mulde (7) in nicht drehendem Zustand des Drehschwingungsdämpfers einen radialen Abstand voneinander haben.

2. Drehschwingungsdämpfer nach Anspruch 1, dadurch gekennzeichnet, daß die Anschlagfläche (6) im wesentlichen V-förmig ausgebildet ist.

3. Drehschwingungsdämpfer nach Anspruch 1 bis 2, dadurch gekennzeichnet, daß in den in Richtung des Schwungringes (2) vorspringenden Teilbereichen der zweiten Federelemente (4) eine Trägheitsmasse (5.1) eingebettet ist.

4. Drehschwingungsdämpfer nach Anspruch 1 bis 2, dadurch gekennzeichnet, daß die zweiten Federelemente (4) in dem sich mit den dritten Federelementen (8) deckenden Umfangssektor durch einen Radialspalt (9) von dem Nabenring (1) getrennt und durch außerhalb dieses Umfangssektors angeordnete Halteflächen (10) mit dem Nabenring (1) verbunden sind.

5. Drehschwingungsdämpfer nach Anspruch 1 und 4, dadurch gekennzeichnet, daß eine im wesentlichen mittig in der Anschlagfläche (6) errichtete Flächennormale die Haltefläche (10) im wesentlichen mittig durchschneidet.

## Claims

1. A rotational-speed-dependent torsional vibration damper in which a hub ring and a flywheel ring enclose one another radially and are at least temporarily connected to one another parallel to one another by first and second spring elements of rubber distributed uniformly in the peripheral direction and designed in a column shape, in which arrangement the second spring elements can be extended in the radial direction and brought into complementary engagement with the flywheel ring by the centrifugal forces resulting from the initiation of high rotational speeds, characterized in that the second spring elements (4), as viewed in the peripheral direction, are defined by a stop surface (6) which projects in the direction of the flywheel ring (2) and engages in a congruently shaped hollow (7) of a third spring element (8) of rubber, in that the third spring elements (8) are secured to the flywheel ring (2), and in that the stop surface (6) and the hollow (7) are at a radial distance from one another in the non-rotating state of the torsional vibration damper.

2. A torsional vibration damper according to claim 1, characterized in that the stop surface (6) is essentially of V-shaped design.

3. A torsional vibration damper according to either of claims 1 and 2, characterized in that an interia mass (5.1) is embedded in the sections of the second spring elements (4) which project in the direction of the flywheel ring (2).

4. A torsional vibration damper according to either of claims 1 and 2, characterized in that the second spring elements (4) are separated from the hub ring (1) by a radial gap (9) in the peripheral sector coinciding with the third spring elements (8) and are connected to the hub ring (1) by retaining surfaces (10) arranged outside this peripheral sector.

5. A torsional vibration damper according to either of claims 1 and 4, characterized in that a surface normal erected essentially centrally in the stop surface (6) cuts essentially centrally through the retaining surface (10).

## Revendications

1. Amortisseur de vibrations en torsion s'adaptant à la vitesse de rotation, avec lequel une frette de moyeu de roue et un anneau volant s'entourent l'un l'autre de manière radiale et sont reliés parallèlement l'un à l'autre, au moins temporairement, par des premiers et seconds éléments élastiques en caoutchouc exécutés en forme de colonnes et répartis uniformément dans la direction circonférentielle, les seconds éléments élastiques étant extensibles dans la direction radiale sous l'effet des forces centrifuges se manifestant lors de l'instauration de vitesses de rotation élevées et pouvant être mis en prise complémentaire avec l'anneau volant, cet amortisseur étant caractérisé en ce que les seconds éléments élastiques (4), vus dans la direction circonférentielle, sont limités par une surface d'arrêt (6) saillant dans la direction de l'anneau volant (2), qui s'avance dans une cavité (7) congrûment moulée d'un troisième élément élastique (8) en caoutchouc, que les troisièmes éléments élastiques (8) sont fixés sur l'anneau volant (2) et que les surfaces d'arrêt (6) et la cavité (7) présentent entre elles, dans l'état de non rotation de l'amortisseur de vibrations en torsion une distance radiale.

2. Amortisseur de vibrations en torsion selon la revendication 1, caractérisé en ce que la surface d'arrêt (6) est configurée sensiblement en forme de V.

3. Amortisseur de vibrations en torsion selon les revendications 1 à 2, caractérisé en ce qu'une masse d'inertie (5.1) est insérée dans les parties saillantes des seconds éléments élastiques (4) dans la direction de l'anneau volant (2).

4. Amortisseur de vibrations en torsion selon les revendications 1 à 2, caractérisé en ce que les seconds éléments élastiques (4) sont séparés de la frette de moyeu de roue (1) par une fente radiale (9) dans le secteur de la circonférence qui coïncide avec les troisièmes éléments élastiques (8) et qu'ils sont reliés à la frette de moyeu de roue (1) par des surfaces de retenue (10) situées en dehors de ce secteur de la circonférence.

5. Amortisseur de vibrations en torsion selon les revendications 1 et 4, caractérisé en ce qu'une normale de surface dressée sensiblement au milieu de la surface d'arrêt (6) coupe la surface de retenue (10) sensiblement en son milieu.
